# EUROPEAN PATENT SPECIFICATION

(11) **EP 2 842 006 B1**
(45) Date of publication and mention of the grant of the patent: **17.03.2021**
(21) Application number: 12728130.1
(22) Date of filing: 26.04.2012
(51) Int. Cl.: G05B 19/402, G07F 11/36, G05B 19/19

(54) **SYSTEM AND PROCESS FOR CONTROLLING COUPLED DELIVERING SPIRALS**
SYSTEM UND VERFAHREN ZUR STEUERUNG GEKOPPELTER AUSGABESPIRALEN
SYSTÈME ET PROCESSUS DE COMMANDE DE SPIRALES DE DISTRIBUTION COUPLÉES

(43) Date of publication of application: 04.03.2015
(73) Proprietor: Sandenvendo Europe S.p.a., 15030 Casale Monferrato (AL) (IT)
(72) Inventor: GARBARINO, Andrea, I-15030 Casale Monferrato (IT)
(74) Representative: Garavelli, Paolo
(86) International application number: PCT/IT2012/000122
(87) International publication number: WO 2013/160922

(56) References cited:
- WO-A1-2006/120846

## Description

The present invention refers to a system and a process for controlling coupled delivering spirals for products according to WO-A1-2006/120846, which is the preamble of Claims 1 and 2.

As known, product delivering or "vending" machines are used, that, in order to deliver products, use delivering spirals substantially arranged in an horizontal position that, by rotating around their axis of symmetry under the action of a motor-reducer equipped with an electric control motor, translate the products inserted between their turns down to the delivering opening, through which the product, selected by the purchaser, falls down, typically by gravity, going out of the respective spiral turn. The motor is then connected to electronic control apparatuses for operating the motor itself, so that, when a product must be dispensed, such electronic control apparatuses control the motor so that, through the motor-reducer, the delivering spiral performs a complete (or half) rotation to drag all products contained therein: the first product housed in the spiral turn which is nearest to the free edge will then be able to be unconstrained from the turn itself and fall down the delivering opening.

When however the sizes of the products are excessive to be able to be housed in a single delivering spiral, the state of the art provides for the use of two coupled delivering spirals. In this case, the two delivering spirals have the same diameter and pitch, but are wound along opposite directions. The product is inserted into both delivering spirals. The two delivering spirals are therefore mutually connected through mechanical means (typically gears) so that the motion of a spiral is transmitted to the other spiral, thereby making them rotete synchronised but along contrary directions. In this manner, a single motor is enough, connected to one of the two delivering spirals, so that both anyway rotate synchronously.

However, for such products whose sizes prevent them from being dispensed in two coupled delivering spirals, it is necessary for the two spirals to be placed at a great distance, this making extremely complicated and burdensome to mechanically connect them.

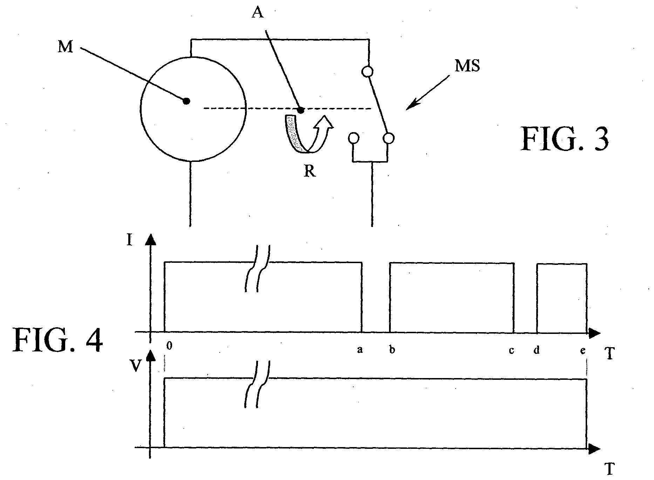

It is also known that, in order to make the motor perform a certain rotation, typically a complete (or half) revolution, it is necessary to detect the position of the drive shaft connecting the motor to the spirals, so that it is possible to discriminate when a complete (or half) rotation is performed. As it is also possible to note, in particular in enclosed FIG. 3, the prior art provides that the rotation R of a complete revolution of the drive shaft A of the motor M is determined through the use of a micro-switch MS that is activated by a cam stiffly connected to the shaft A itself. The cam typically has one (or two) notch. When a rotation R occurs, the micro-switch MS changes its status twice when the cam rotates by a complete revolution during its operating cycle.

The state of the art for motor-reducers provides that there are only two wires for every motor, that function both for supply and as positioning signal. The positioning signal is given by a current interruption of a short length. The micro-switch typically has two, normally closed NC and normally open NA, output contacts. These two contacts are mutually connected and are connected to a supply pole of the motor M. The other pole is connected to the common contact of the micro-switch MS: therefore, the motor is connected to the supply through the contacts of the micro-switch MS.

In this way, as it is possible to note in the time T/current I graph of the enclosed FIG. 3, related to the operation of the motor of FIG. 3, during the micro-switch MS switching, there occurs a brief continuity interruption and therefore the motor supply is interrupted. The electronic control apparatus therefore interprets the position of the motor M by counting the number of interruptions and the time passing between them, and in this way it is possible to perform a complete rotation of the motor M itself.

Therefore, object of the present invention is solving the above prior art problems by providing a control system that allows controlling the operation of two coupled delivering spirals, substantially arranged at any distance between them, without requiring any mechanical coupling between the spirals themselves, consequently allowing to dispense a wide variety of products, even with big sizes.

Another object of the present invention is providing a control system of coupled spirals delivering products that can be easily and cheaply made, since it exploits also the electronic control apparatuses and the micro-switch already installed and/or used in known product dispensing or vending machines.

Another object of the present invention is providing a control system for coupled product-delivering spirals that can be installed also on already existing delivering machines.

Moreover, an object of the present invention is providing a process for controlling coupled spirals through the above-mentioned system.

The above and other objects and advantages of the invention, as will appear from the following description, are obtained with a product delivery machine comprising coupled delivery spirals, electronic control apparatus and a control system for coupled delivering spirals as claimed in claim 1.

Moreover, the above and other objects and advantages of the invention are obtained with a control process for coupled delivering spirals as claimed in claim 2.

It is intended that all enclosed claims are an integral part of the present disclosure.

The present invention will be better described by some preferred embodiments thereof, given as a non-limiting example, with reference to the enclosed drawings, in which:
- FIG. 1 shows a block diagram representing a preferred embodiment of the control system according to the present invention;
- FIG. 2 shows some graphs representing the operating principle of the control system according to the present invention;
- FIG. 3 shows a block diagram representing a control system of a prior art motor; and
- FIG. 4 shows the time/current and time/voltage operating graphs for the motor of FIG. 3.

In general, the subject matter of the present invention is a control system that allows making a virtual micro-switch and a related virtual motor composed of at least two motors, and related micro-switches, separated in such a way that the electronic control apparatuses, already known per se for controlling the individual motors for rotating the delivering spirals, receive an aggregate signal from such virtual motor and that, therefore, the at least two motors and their related micro-switches are seen, by the above apparatuses, as a single prior art motor, and, in this way, controlled by taking care of providing adequate current interruptions to control its rotation through controlling the virtual motor. In this way, the two motors and their related micro-switches representing the virtual motor and its related virtual micro-switch behave, as regards the electronic control apparatuses, through the control system according to the present invention, as they were a single motor, known in the art.

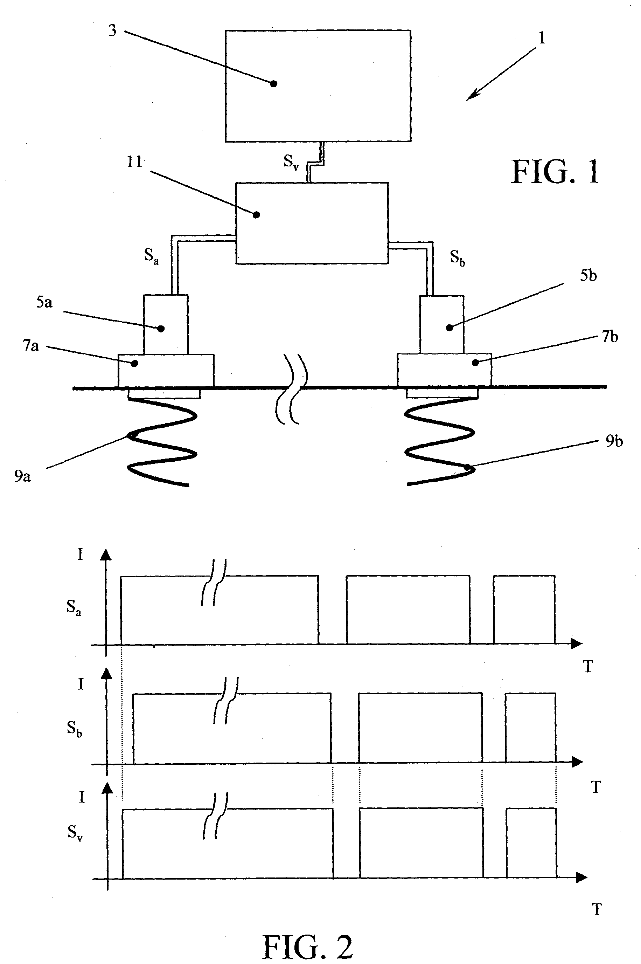

With reference then in particular to FIG. 1, it is possible to note that the control system 1 according to the present invention comprises:
- at least one first electric motor 5a operatively coupled, possibly by interposing a first motor-reducer 7a, to a first delivering spiral 9a;
- at least one second electric motor 5b operatively coupled, possibly by interposing a first motor-reducer 7b, to a second delivering spiral 9b;
- at least one first micro-switch, substantially known per se, adapted to cooperate with a cam equipped with at least one notch and integral with the drive shaft of such first motor 5a to measure its rotation depending on current interruptions;
- at least one second micro-switch, substantially known per se, adapted to cooperate with a cam equipped with at least one notch and integral with the drive shaft of such second motor 5b to measure its rotation depending on current interruptions;
- first detecting means of at least one first signal Sₐ of the detected current interruptions and coming from the first micro-switch of the first motor 5a;
- second detecting means of at least one second signal S_{b} of the detected current interruptions and coming from the second micro-switch of the second motor 5b;
- processing means adapted to overlap such first signal Sₐ and such second signal S_{b} to produce a third aggregate signal Sᵥ of the current interruptions detected by a virtual micro-switch of a virtual motor;
- transmitting means of such third signal Sᵥ to electronic control apparatuses 3, known per se, of the rotation of delivering spirals of a product delivering or vending machine, such electronic control apparatuses 3 being adapted to supply with current such virtual motor depending on such third signal Sᵥ, and such processing means being adapted to divide such current supply between such first motor 5a and such second motor 5b depending on such related first Sₐ and second S_{b} signal.

Such first and second detecting means, such processing means and such transmitting means are embedded into a single electronic card 11 interposed between such electronic control apparatuses 3 and such first motor 5a and first micro-switch and such second motor 5b and second micro-switch.

Therefore such electronic card 11 is connected both to the electronic control apparatuses 3 and to the two motors 5a, 5b and, possibly, to their related motor-reducers 7a, 7b and manages such two motors 5a, 5b in such a way that both perform a complete rotation, starting approximately at the same time, and end their rotation after having performed a complete rotation.

The rotation of a complete revolution of the drive shaft of each one of the two motors 5a, 5b is therefore determined by the related micro-switch that is activated by the corresponding cam, integral with the shaft of the respective motore 5a, 5b.

As it is possible to note in FIG. 2, which shows the time T/current I graphs respectively of the first signal Sₐ, of the second signal S_{b} and of the aggregate signal Sᵥ, when each one of the two motors 5a, 5b performs a complete rotation, its related micro-switch changes its status twice. Like in the known prior art, each one of the two motors 5a, 5b has only two wires that function both as current supply and as transmission of the related first and second signal Sₐ, S_{b}.

The signal Sₐ, S_{b} is therefore supplies by a short-term current interruption. Each one of the micro-switches therefore has two, normally closed NC e normally open NA, output contacts. These two contacts are mutually connected and are connected to a supply pole of the related motor 5a, 5b, while the other pole is connected to the common contact of the respective micro-switch: consequently, each one of the two motors 5a, 5b is connected to the current supply through the contacts of the corresponding micro-switch.

In this way, as it is possible to note in the time T/current A graphs of FIG. 2, when switching each one of the two micro-switches, there occurs a brief continuity interruption and therefore the motor supply is interrupted, determining the behaviour of the related first Sₐ or second S_{b} signal. The processing means therefore receive such signals Sₐ, S_{b}, overlap them and take care of producing the third aggregate signal Sᵥ of the virtual motor with the behaviour shown in the related graph of FIG. 2. Such signal is then sent by the transmitting means to the electronic control apparatuses 3 that therefore interpret the position of the virtual motor by counting the number of interruptions of the aggregate signal Sᵥ that they receive and the time that passes between the interruptions, and in this way it is possible to perform, substantially synchronously, through the control system 1 according to the present invention, a complete rotation of each one of the motors 5a, 5b, driving in current a complete rotation of the virtual motor itself.

The present invention further deals with a process for controlling a product delivering machine with coupled delivering spirals 9a, 9b through the previously described control system 1, comprising the steps of: a) detecting at least one first signal Sₐ of current interruptions detected and coming from said first micro-switch of said first motor 5a; b) detecting at least one second signal S_{b} of current interruptions detected and coming from said second micro-switch di said second motor 5b; c) overlapping and aggregating said first signal Sₐ and said second signal S_{b}, to produce a third aggregate signal Sᵥ of current interruptions detected by the virtual micro-switch of the virtual motor; d) sending said third aggregate signal S_{y} to said electronic control apparatuses 3; e) interpreting, by said electronic control apparatuses 3, the position of the virtual motor by counting the number of interruptions of the aggregate signal Sᵥ that they receive and the time that passes between the interruptions; and f) receiving a current supply of said virtual motor from said electronic control apparatuses 3 depending on said third signal Sᵥ and dividing said current supply between said first motor 5a and said second motor 5b depending on said related first Sₐ and second S_{b} signal, thereby performing, substantially synchronously, a complete rotation of each one of the motors 5a, 5b, driving in current acomplete rotation of the virtual motor.

## Claims

1. Product delivering machine comprising coupled delivering spirals (9a, 9b), electronic control apparatuses (3) and a control system (1) for said coupled delivering spirals (9a, 9b), said control system (1) being designed to make a virtual motor comprising:
- at least one first electric motor (5a) operatively coupled, possibly by interposing a first motor-reducer (7a), to a first delivering spiral (9a);
- at least one second electric motor (5b) operatively coupled, possibly by interposing a second motor-reducer (7b), to a second delivering spiral 9b;
said control system (1) being also designed to make a virtual micro-switch comprising:
- at least one first micro-switch adapted to cooperate with a cam equipped with at least one notch and integral with a drive shaft of said first motor (5a) to measure its rotation depending on interruptions performed to its supply current;
- at least one second micro-switch adapted to cooperate with a cam equipped with at least one notch and integral with a drive shaft of said second motor (5b) to measure its rotation depending on interruptions performed on its supply current;
said control system (1) further comprising:
- first detecting means of at least one first signal (Sₐ) derived from said current interruptions detected and coming from said first micro-switch of said first motor (5a); and
- second detecting means of at least one second signal (S_{b}) derived from said current interruptions detected and coming from said second micro-switch of said second motor (5b) ;
**characterised in that** said control system (1) further comprises:
- processing means adapted to overlap and aggregate said first signal (Sₐ) and said second signal (S_{b}), to produce a third aggregate signal (Sᵥ) of current interruptions detected by the virtual micro-switch of the virtual motor;
transmitting means of said third signal (Sᵥ) to said electronic control apparatuses (3) of the product delivering machine, said electronic control apparatuses (3) being adapted to supply with current said virtual motor depending on said third signal (Sᵥ), and said processing means being adapted to divide said current supply between said first motor (5a) and said second motor (5b) depending on said related first (Sa) and second (S_{b}) signal, said electronic control apparatuses (3) being designed to interpret the position of the virtual motor by counting the number of interruptions of the aggregate signal (Sᵥ) that they receive and the time that passes between the interruptions,
wherein said control system (1) thereby performs, substantially synchronously, a complete rotation of each one of the motors (5a, 5b), driving in current a complete rotation of the virtual motor;
wherein said first and second detecting means, said processing means and said transmitting means are embedded into a single electronic card (11) interposed between said electronic control apparatuses (3) and said first motor (5a) and first micro-switch and said second motor (5b) and second micro-switch;
wherein each one of said two motors (5a, 5b) has only two wires, for current supply and for transmitting said related first and second signal (Sₐ, S_{b}); and
wherein each one of said micro-switches has two, normally closed NC and normally open NA, output contacts, said two contacts being mutually connected and connected to a supply pole of a related motor (5a, 5b), while the other pole is connected to a common contact of a respective micro-switch.

2. Process for controlling a product delivering machine with coupled delivering spirals (9a, 9b) through the control system (1) according to Claim 1, the process comprising the following steps:
a) detecting at least one first signal (Sₐ) of current interruptions detected and coming from said first micro-switch of said first motor (5a);
b) detecting at least one second signal (S_{b}) of current interruptions detected and coming from said second micro-switch di said second motor (5b);
c) overlapping and aggregating said first signal (Sₐ) and said second signal (S_{b}), to produce a third aggregate signal (Sᵥ) of current interruptions detected by the virtual micro-switch of the virtual motor;
d) sending said third aggregate signal (Sᵥ) to said electronic control apparatuses (3);
e) interpreting, by said electronic control apparatuses (3), the position of the virtual motor by counting the number of interruptions of the aggregate signal (Sᵥ) that they receive and the time that passes between the interruptions; and
f) receiving a current supply of said virtual motor from said electronic control apparatuses (3) depending on said third signal (Sᵥ) and dividing said current supply between said first motor (5a) and said second motor (5b) depending on said related first (Sa) and second (S_{b}) signal, thereby performing, substantially synchronously, a complete rotation of each one of the motors (5a, 5b), driving in current a complete rotation of the virtual motor.

## Patentansprüche

1. Produktabgabemaschine, umfassend gekoppelte Abgabespiralen (9a, 9b), elektronische Steuervorrichtungen (3) und ein Steuersystem (1) für die gekoppelten Abgabespiralen (9a, 9b), wobei das Steuersystem (1) ist Entwickelt, um eine virtuelle Engine zu erstellen, die Folgendes umfasst:
- mindestens einen ersten Elektromotor (5a), der möglicherweise durch Zwischenschaltung eines ersten Getriebemotors (7a) betriebsmäßig mit einer ersten Versorgungsspirale (9a) gekoppelt ist;
- mindestens einen zweiten Elektromotor (5b), der möglicherweise durch Zwischenschaltung eines ersten Getriebemotors (7b) betriebsmäßig mit einer zweiten Versorgungsspirale (9b) gekoppelt ist;
- mindestens einen ersten Mikroschalter, der zur Zusammenarbeit mit einem Nocken ausgelegt ist, der mit mindestens einer Aussparung versehen und in eine Antriebswelle des ersten Motors (5a) integriert ist, um seine Drehung auf der Grundlage von Unterbrechungen seines Versorgungsstroms zu messen;
- mindestens einen zweiten Mikroschalter, der zur Zusammenarbeit mit einem Nocken ausgelegt ist, der mit mindestens einer Aussparung versehen und in eine Antriebswelle des zweiten Motors (5b) integriert ist, um seine Drehung auf der Grundlage von Unterbrechungen seines Versorgungsstroms zu messen;
wobei das Steuersystem (1) ferner umfasst:
- erstes Mittel zum Erfassen mindestens eines ersten Signals (Sa), das von den erfassten Stromunterbrechungen abgeleitet ist und von dem ersten Mikroschalter des ersten Motors (5a) kommt; und
- zweites Mittel zum Erfassen mindestens eines zweiten Signals (Sb), das von den erfassten Stromunterbrechungen abgeleitet ist und von dem zweiten Mikroschalter des zweiten Motors (5b) kommt;
**dadurch gekennzeichnet, dass** das Steuersystem (1) ferner umfasst:
- Verarbeitungsmittel, die dazu ausgelegt sind, das erste Signal (Sa) und das zweite Signal (Sb) zu überlagern und zu aggregieren, um ein drittes Aggregatsignal (Sv) von Stromunterbrechungen zu erzeugen, die vom virtuellen Mikroschalter des virtuellen Motors erfasst werden;
- Mittel zum Übertragen des dritten Signals (Sv) an die elektronischen Steuervorrichtungen (3) der Produktausgabemaschine, wobei die elektronischen Steuervorrichtungen (3) in der Lage sind, dem virtuellen Motor als Funktion des dritten Signals (Sv) und das Verarbeitungsmittel bedeutet, dass es in der Lage ist, die Stromversorgung zwischen dem ersten Motor (5a) und dem zweiten Motor (5b) als Funktion der relativen ersten (Sa) und zweiten (Sb) Signale, den elektronischen Steuervorrichtungen, aufzuteilen (3) entworfen werden, um die Position des virtuellen Motors durch Zählen der Anzahl von Unterbrechungen des Aggregatsignals (Sv), das sie empfangen, und der Zeit zwischen Unterbrechungen zu interpretieren,
wobei das Steuersystem (1) somit im wesentlichen synchron eine vollständige Drehung jedes der Motoren (5a, 5b) ausführt, wobei im Strom eine vollständige Drehung des virtuellen Motors angetrieben wird;
wobei dem die erste und die zweite Erfassungseinrichtung, die Verarbeitungseinrichtung und die Übertragungseinrichtung in einer einzelnen elektronischen Karte (11) enthalten sind, die zwischen den elektronischen Steuervorrichtungen (3) und dem ersten Motor (5a) und dem ersten Mikroschalter und angeordnet ist der zweite Motor (5b) und der zweite Mikroschalter;
wobei jeder der beiden Motoren (5a, 5b) nur zwei Drähte zur Stromversorgung und zur Übertragung der relativen ersten und zweiten Signale (Sa, Sb) aufweist; und
wobei jeder der Mikroschalter zwei normalerweise geschlossene NC- und normalerweise offene NO-Ausgangskontakte aufweist, wobei die beiden Kontakte miteinander verbunden und mit einem Stromversorgungspol eines relativen Motors (5a, 5b) verbunden sind, während der andere Pol mit verbunden ist ein gemeinsamer Kontakt eines jeweiligen Mikroschalters.

2. Steuerverfahren einer Produktausgabemaschine mit Ausgabespiralen (9a, 9b), die mittels des Steuerungssystems (1) nach Anspruch 1 gekoppelt sind, wobei das Verfahren die Schritte umfasst:
a) Erfassen mindestens eines ersten Signals (Sa) von erfassten Stromunterbrechungen und Kommen von dem ersten Mikroschalter des ersten Motors (5a);
b) Erfassen mindestens eines zweiten Signals (Sb) von erfassten Stromunterbrechungen und Kommen von dem zweiten Mikroschalter des zweiten Motors (5b);
c) Überlagern und Aggregieren des ersten Signals (Sa) und des zweiten Signals (Sb), um ein drittes Aggregatsignal (Sv) von Stromunterbrechungen zu erzeugen, die vom virtuellen Mikroschalter des virtuellen Motors erfasst werden;
d) Senden des dritten Aggregatsignals (Sv) an die elektronischen Steuervorrichtungen (3);
e) Interpretieren der Position des virtuellen Motors durch die elektronischen Steuervorrichtungen (3) durch Zählen der Anzahl von Unterbrechungen des Aggregatsignals (Sv), das sie empfangen, und der Zeit, die zwischen den Unterbrechungen vergeht; und
f) Empfangen einer Stromversorgung des virtuellen Motors von den elektronischen Steuervorrichtungen (3) als Funktion des dritten Signals (Sv) und Teilen der Stromversorgung zwischen dem ersten Motor (5a) und dem zweiten Motor (5b)) als Funktion der relativen ersten (Sa) und zweiten (Sb) Signale, wodurch auf eine im Wesentlichen synchrone Weise eine vollständige Drehung jedes der Motoren (5a, 5b) ausgeführt wird, wobei im Strom eine vollständige Drehung des virtuellen Motors angetrieben wird.

## Revendications

1. Machine de distribution de produit comprenant des spirales de distribution couplées (9a, 9b), des appareils de commande électroniques (3) et un système de commande (1) pour lesdites spirales de distribution couplées (9a, 9b), ledit système de commande (1) étant conçu pour construire un moteur virtuel comprenant:
- au moins un premier moteur électrique (5a) couplé fonctionnellement, éventuellement par interposition d'un premier motoréducteur (7a), à une première spirale d'alimentation (9a);
- au moins un deuxième moteur électrique (5b) couplé fonctionnellement, éventuellement par l'interposition d'un premier motoréducteur (7b), à une deuxième spirale d'alimentation (9b);
- au moins un premier micro-interrupteur apte à coopérer avec une came pourvue d'au moins un évidement et solidaire d'un arbre d'entraînement dudit premier moteur (5a) pour mesurer sa rotation en fonction des interruptions apportées à son courant d'alimentation;
- au moins un deuxième micro-interrupteur apte à coopérer avec une came munie d'au moins un évidement et solidaire d'un arbre d'entraînement dudit deuxième moteur (5b) pour mesurer sa rotation en fonction des interruptions apportées à son courant d'alimentation;
ledit système de commande (1) comprenant en outre:
- des premiers moyens pour détecter au moins un premier signal (Sa) dérivé desdites interruptions de courant détectées et provenant dudit premier micro-interrupteur dudit premier moteur (5a); est
- des seconds moyens pour détecter au moins un second signal (Sb) dérivé desdites interruptions de courant détectées et provenant dudit second micro-interrupteur dudit second moteur (5b);
**caractérisé en ce que** ledit système de commande (1) comprend en outre:
- des moyens de traitement adaptés pour superposer et agréger ledit premier signal (Sa) et ledit deuxième signal (Sb) pour produire un troisième signal agrégé (Sv) d'interruptions de courant détectées par le micro-interrupteur virtuel du moteur virtuel;
- des moyens pour transmettre ledit troisième signal (Sv) auxdits appareils électroniques de commande (3) de la machine de distribution de produit, lesdits appareils électroniques de commande (3) étant aptes à fournir du courant audit moteur virtuel en fonction dudit troisième signal (Sv) et lesdits moyens de traitement pouvant diviser ladite alimentation en courant entre ledit premier moteur (5a) et ledit deuxième moteur (5b) en fonction desdits premier (Sa) et deuxième (Sb) signaux relatifs, lesdits appareils de commande électroniques (3) étant conçus pour interpréter la position du moteur virtuel en comptant le nombre d'interruptions du signal agrégé (Sv) qu'ils reçoivent et le temps entre les interruptions,
dans lequel ledit système de commande (1) effectue ainsi, de manière sensiblement synchrone, une rotation complète de chacun des moteurs (5a, 5b), entraînant en courant une rotation complète du moteur virtuel;
dans lequel lesdits premier et second moyens de détection, lesdits moyens de traitement et lesdits moyens de transmission sont incorporés dans une seule carte électronique (11) interposée entre lesdits dispositifs de commande électronique (3) et lesdits premier moteur (5a) et premier micro-interrupteur et ledit deuxième moteur (5b) et ledit deuxième micro-interrupteur;
dans lequel chacun desdits deux moteurs (5a, 5b) n'a que deux fils, pour l'alimentation en courant et pour transmettre lesdits premier et second signaux relatifs (Sa, Sb); et
dans lequel chacun desdits micro-interrupteurs a deux contacts de sortie normalement fermés NC et normalement ouverts NO, lesdits deux contacts étant connectés ensemble et connectés à un pôle d'alimentation d'un moteur relatif (5a, 5b), tandis que l'autre pôle est connecté à un contact commun d'un micro-interrupteur respectif.

2. Procédé de commande d'une machine de distribution de produit avec des spirales de distribution (9a, 9b) couplées au moyen du système de commande (1) selon la revendication 1, le procédé comprenant les étapes de:
a) détecter au moins un premier signal (Sa) d'interruptions de courant détectées et provenant dudit premier micro-interrupteur dudit premier moteur (5a);
b) détecter au moins un deuxième signal (Sb) d'interruptions de courant détectées et provenant dudit deuxième micro-interrupteur dudit deuxième moteur (5b);
c) superposer et agréger ledit premier signal (Sa) et ledit deuxième signal (Sb), pour produire un troisième signal agrégé (Sv) d'interruptions de courant détectées par le micro-interrupteur virtuel du moteur virtuel;
d) envoyer ledit troisième signal agrégé (Sv) auxdits appareils de commande électroniques (3);
e) interpréter, par lesdits appareils de commande électroniques (3), la position du moteur virtuel en comptant le nombre d'interruptions du signal global (Sv) qu'ils reçoivent et le temps qui s'écoule entre les interruptions; et
f) recevoir une alimentation en courant dudit moteur virtuel à partir desdits appareils de commande électroniques (3) en fonction dudit troisième signal (Sv) et diviser ladite alimentation en courant entre ledit premier moteur (5a) et ledit deuxième moteur (5b)) en fonction desdits premier (Sa) et second (Sb) signaux relatifs, effectuant ainsi, de manière sensiblement synchrone, une rotation complète de chacun des moteurs (5a, 5b), entraînant en courant une rotation complète du moteur virtuel.
